# EUROPÄISCHE PATENTSCHRIFT

(11) **EP 2 550 335 B1**
(45) Veröffentlichungstag und Bekanntmachung des Hinweises auf die Patenterteilung: **15.01.2014**
(21) Anmeldenummer: 11708507.6
(22) Anmeldetag: 18.03.2011
(51) Int. Cl.: C08L 71/00, C08L 101/00, C08L 81/06, C08L 67/00, C08L 81/02, C08L 71/10, C08L 69/00

(54) **VERBESSERTE BLENDS AUS POLYARYLENETHERN UND POLYARYLENSULFIDEN**
IMPROVED BLENDS OF POLYARYLENE ETHERS AND POLYARYLENE SULFIDES
MÉLANGES AMÉLIORÉS D'ÉTHERS DE POLYARYLÈNE ET DE SULFURES DE POLYARYLÈNE

(30) Priorität: 23.03.2010 EP 10157281
(43) Veröffentlichungstag der Anmeldung: 30.01.2013
(73) Patentinhaber: BASF SE, 67056 Ludwigshafen (DE)
(72) Erfinder: WEBER, Martin, 67487 Maikammer (DE); MALETZKO, Christian, 67122 Altrip (DE); ZEIHER, Susanne, 67071 Ludwigshafen (DE); VÖLKEL, Mark, 68526 Ladenburg (DE); GÜNTHERBERG, Norbert, 67346 Speyer (DE); BLUHM, Rüdiger, 67117 Limburgerhof (DE); BRUCHMANN, Bernd, 67251 Freinsheim (DE)
(86) Internationale Anmeldenummer: PCT/EP2011/054132
(87) Internationale Veröffentlichungsnummer: WO 2011/117153

(56) Entgegenhaltungen:
- EP-A1- 0 673 973
- EP-A1- 0 855 429
- EP-A2- 0 855 430
- EP-A2- 0 903 376

## Beschreibung

Die vorliegende Erfindung betrifft thermoplastische Formmassen enthaltend folgende Komponenten:
(A1) mindestens ein Polyarylenether mit im Mittel höchstens 0,5 phenolischen Endgruppen pro Polymerkette,
(A2) optional mindestens ein Polyarylenether mit im Mittel mindestens 1,5 phenolischen Endgruppen pro Polymerkette,
(B) mindestens ein Polyarylensulfid,
(C) mindestens ein hyperverzweigtes Polymer ausgewählt aus hyperverzweigten Polycarbonaten und hyperverzweigten Polyestern,
(D) optional mindestens einen funktionalisierten Polyarylenether umfassend Carboxylgruppen,
(E) optional mindestens ein faser- oder teilchenförmiger Füllstoff und
(F) optional weitere Zusatzstoffe und/oder Verarbeitungshilfsmittel.

Darüber hinaus betrifft die vorliegende Erfindung ein Verfahren zur Herstellung der erfindungsgemäßen thermoplastischen Formmassen, deren Verwendung zur Herstellung von Formteilen, Fasern, Schäumen oder Filmen und die so erhältlichen Formteile, Fasern, Schäume und Filme.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen. Polyarylenether sind amorph und weisen daher oft eine unzureichende Beständigkeit gegenüber aggressiven Medien auf. Weiterhin weisen Polyarylenether auch eine hohe Schmelzeviskosität auf, was besonders die Verarbeitung zu großen Formteilen mittels Spritzguss beeinträchtigt. Die hohe Schmelzeviskosität ist insbesondere nachteilig bei der Herstellung von Formmassen mit hoher Füllstoff- oder Faserbeladung.

Mischungen aus den hochtemperaturbeständigen Polyarylenethern und Polyarylensulfiden sind an sich bekannt und weisen gegenüber den Einzelkomponenten z.B. verbesserte mechanische Eigenschaften und höhere Chemikalienbeständigkeit auf.

Aus der EP-A 673 973 sind Glasfaser-gefüllte Polymermischungen enthaltend Polyarylenether mit mindestens 0,03 Gew.-% OH-Endgruppen, Polyarylenether mit weniger als 0,03 Gew.-% OH-Endgruppen und Polyphenylensulfid bekannt. Die thermoplastischen Formmassen der EP-A 673 973 weisen nicht für alle Anwendungen ausreichende mechanische Eigenschaften, insbesondere eine ausreichende Reißdehnung, Reißfestigkeit und Schlagzähigkeit und ein ausreichendes E-Modul auf. Insbesondere die Fließfähigkeit ist verbesserungswürdig.

Aus der EP-A 855 428 sind kautschukhaltige Polyarylenether bekannt, welche Carboxylgruppen-haltige funktionalisierte Polyarylenether enthalten. Die thermoplastischen Formmassen der EP-A 855 428 weisen nicht für alle Anwendungen ausreichende mechanische Eigenschaften auf. Insbesondere die Fließfähigkeit ist verbesserungswürdig.

Gegenstand der EP-A 903 376 sind thermoplastische Formmassen enthaltend Polyarylenether, Polyarylensulfid und Kautschuk, welche ebenfalls zusätzlich funktionalisierte Polyarylenether enthalten. Die in der EP-A 903 376 verwendeten funktionalisierten Polyarylenether sind hinsichtlich ihrer Eignung für verstärkte Formmassen oft unzureichend. Die Verwendung solcher Produkte führt in gefüllten, insbesondere faserverstärkten Formmassen oft zu unzureichenden mechanischen Eigenschaften, insbesondere zu einer unzureichenden Zähigkeit und Reißfestigkeit sowie zu einer unzureichenden Fließfähigkeit.

Der Stand der Technik weist darüber hinaus eine für viele Anwendungen verbesserungsbedürftige Steifigkeit und einen hohen Grad an Anisotropie bezüglich der Steifigkeit (E-Modul) auf.

Die Aufgabe der vorliegenden Erfindung bestand demzufolge darin, thermoplastische Formmassen auf Basis von Polyarylenethern bereitzustellen, welche die vorgenannten Nachteile nicht oder in geringerem Umfang aufweisen. Insbesondere sollten die thermoplastischen Formmassen eine verbesserte Fließfähigkeit aufweisen. Gleichzeitig sollten die thermoplastischen Formmassen gute mechanische Eigenschaften, insbesondere eine hohe Steifigkeit (E-Modul), eine hohe Schlagzähigkeit, eine hohe Reißdehnung und eine hohe Reißfestigkeit aufweisen. Darüber hinaus sollte die Anisotropie bezüglich der Steifigkeit verbessert werden.

Die vorgenannten Aufgaben werden gelöst durch die erfindungsgemäßen thermoplastischen Formmassen. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen thermoplastischen Formmassen enthalten folgende Komponenten:
- (A1): mindestens ein Polyarylenether mit im Mittel höchstens 0,5 phenolischen Endgruppen pro Polymerkette,
- (A2): optional mindestens ein Polyarylenether mit im Mittel mindestens 1,5 phenolischen Endgruppen pro Polymerkette,
- (B): mindestens ein Polyarylensulfid,
- (C): mindestens ein hyperverzweigtes Polymer ausgewählt aus hyperverzweigten Polycarbonaten und hyperverzweigten Polyestern,
- (D): optional mindestens einen funktionalisierten Polyarylenether umfassend Carboxylgruppen,
- (E): optional mindestens ein faser- oder teilchenförmiger Füllstoff und
- (F): optional weitere Zusatzstoffe und/oder Verarbeitungshilfsmittel.

Vorzugsweise enthalten die thermoplastischen Formmassen der vorliegenden Erfindung folgende Komponenten:
- (A1): mindestens ein Polyarylenether mit im Mittel höchstens 0,5 phenolischen Endgruppen pro Polymerkette,
- (A2): optional mindestens ein Polyarylenether mit im Mittel mindestens 1,5 phenolischen Endgruppen pro Polymerkette,
- (B): mindestens ein Polyarylensulfid,
- (C): mindestens ein hyperverzweigtes Polymer ausgewählt aus hyperverzweigten Polycarbonaten und hyperverzweigten Polyestern,
- (D): optional mindestens einen funktionalisierten Polyarylenether umfassend Carboxylgruppen,
- (E): mindestens ein faser- oder teilchenförmiger Füllstoff und
- (F): optional weitere Zusatzstoffe und/oder Verarbeitungshilfsmittel.

Die thermoplastischen Formmassen der vorliegenden Erfindung enthalten vorzugsweise von 90 bis 99,9 Gew.-% der Komponente (A1) und von 0,1 bis 10 Gew.-% der Komponente (C), wobei die Summe der Gew.-% der Komponenten (A) und (C) bezogen auf die Gesamtmenge der Komponenten (A) und (C) 100 Gew.-% ergibt.

Die thermoplastischen Formmassen enthalten besonders bevorzugt
- von 20 bis 89,9 Gew.-%, insbesondere von 20 bis 79,5 Gew.-%, der Komponente (A1),
- von 0 bis 10 Gew.-% der Komponente (A2),
- von 5 bis 65 Gew.-%, insbesondere von 5 bis 45 Gew.-%, der Komponente (B),
- von 0,1 bis 5 Gew.-%, insbesondere von 0,5 bis 3 Gew.-% der Komponente (C),
- von 0 bis 15 Gew.-%, insbesondere von 0 bis 10 Gew.-%, der Komponente (D),
- von 5 bis 70 Gew.-%, insbesondere von 15 bis 70 Gew.-% der Komponente (E) und
- von 0 bis 40 Gew.-%, insbesondere von 0 bis 20 Gew.-% der Komponente (F), wobei die Summe der Gew.-% der Komponenten (A) bis (F) bezogen auf die Gesamtmenge der Komponenten (A) bis (F) 100 Gew.-% ergibt.

Die thermoplastischen Formmassen der vorliegenden Erfindung enthalten ganz besonders bevorzugt
- von 20 bis 83,9 Gew.-%, insbesondere von 20 bis 73,5 Gew.-%, der Komponente (A1),
- von 1 bis 10 Gew.-% der Komponente (A2),
- von 5 bis 65 Gew.-%, insbesondere von 5 bis 45 Gew.-%, der Komponente (B),
- von 0,1 bis 5 Gew.-%, insbesondere von 0,5 bis 3 Gew.-%, der Komponente (C),
- von 0 bis 15 Gew.-%, insbesondere von 0 bis 10 Gew.-%, der Komponente (D),
- von 10 bis 70 Gew.-%, insbesondere von 20 bis 70 Gew.-%, der Komponente (E) und
- von 0 bis 40 Gew.-%, insbesondere von 0 bis 20 Gew.-%, der Komponente (F),
wobei die Summe der Gew.-% der Komponenten (A) bis (F) bezogen auf die Gesamtmenge der Komponenten (A) bis (F) 100 Gew.-% ergibt.

Die einzelnen Komponenten werden im Folgenden näher erläutert.

### Komponenten A1 und A2

Erfindungsgemäß enthalten die thermoplastischen Formmassen mindestens ein Polyarylenether (A1) mit im Mittel höchstens 0,5 phenolischen Endgruppen pro Polymerkette und gemäß einer bevorzugten Ausführungsform darüber hinaus mindestens ein Polyarylenether (A2) mit im Mittel mindestens 1,5 phenolischen Endgruppen pro Polymerkette. Der Ausdruck "im Mittel" bedeutet dabei ein Zahlenmittel. Die Komponenten (A1) und (A2) werden gemeinsam als Komponente (A) bezeichnet.

Es ist für den Fachmann offensichtlich, dass die phenolischen Endgruppen reaktiv sind und in den thermoplastischen Formmassen in mindestens teilweise umgesetzter Form vorliegen können. Die thermoplastischen Formmassen werden vorzugsweise durch Compoundierung, d. h. durch Vermischen der Komponenten in einem fließfähigen Zustand hergestellt. Entsprechend ist die Formulierung "thermoplastische Formmassen enthaltend folgende Komponenten" vorzugsweise gleichzusetzen mit "thermoplastische Formmassen erhältlich durch Compoundierung der folgenden Komponenten".

Unter phenolischer Endgruppe wird im Rahmen der vorliegenden Erfindung eine Hydroxygruppe verstanden, die an einen aromatischen Kern gebunden ist und die gegebenenfalls auch deprotoniert vorliegen kann. Es ist dem Fachmann bekannt, dass eine phenolische Endgruppe durch Abspaltung eines Protons infolge Einwirkung einer Base auch als sogenannte Phenolatendgruppe vorliegen kann. Der Begriff phenolische Endgruppen umfasst somit ausdrücklich sowohl aromatische OH- als auch Phenolatgruppen.

Die Bestimmung des Anteils der phenolischen Endgruppen erfolgt vorzugsweise durch potentiometrische Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch. Die Bestimmung des Anteils an Halogenendgruppen erfolgt vorzugsweise mittels Atomspektroskopie.

Aus dem Gewichtsanteil phenolischer Endgruppen bezogen auf das Gesamtgewicht des Polymers (m^{OH}) und dem zahlenmittleren Molekulargewicht (Mₙ^{P}) kann der Fachmann nach bekannten Methoden die mittlere Zahl an phenolischen Endgruppen pro Polymerkette (n^{OH}) unter der Annahme strikt linearer Polymerketten nach folgender Formel ermitteln: n^{OH} = m^{OH} [in Gew.-%] /100 * Mₙ^{P} [in g/mol] * 1/17.

Alternativ kann die mittlere Zahl von phenolischen Endgruppen pro Polymerkette (n^{OH}) unter Voraussetzung strikt linearer Polymerketten bei gleichzeitiger Kenntnis des Gewichtsanteils an Cl-Endgruppen (m^{Cl}) unter der Annahme, dass ausschließlich OH- und Cl-Endgruppen vorliegen, wie folgt berechnet werden: n^{OH} = 2 / (1 + (17/35,45 * m^{Cl} / m^{OH})). Dem Fachmann ist bekannt, wie die Berechnungsweisen im Fall anderer Endgruppen als Cl anzupassen sind.

Ohne sich beschränken zu wollen besteht die Vorstellung, dass die Komponente (A2) infolge ihres hohen Gehaltes an reaktiven phenolischen Endgruppen als Verträglichkeitsvermittler für die Komponenten (A) bis (E) dient. Darüber hinaus besteht die Vorstellung, dass die Komponente (A1) mit ihrem hohen Gehalt an inerten Endgruppen das Eigenschaftsprofil der erfindungsgemäßen thermoplastischen Formmassen weiter verbessert, so dass die Anwesenheit von Polyarylenethern mit phenolischen Endgruppen einerseits und von Polyarylenethern mit inerten Endgruppen andererseits synergistisch mit den Komponenten (C) und (D) zusammenwirkt.

Die Herstellung von Polyarylenethern bei gleichzeitiger Steuerung der Endgruppen ist dem Fachmann bekannt und wird weiter unten näher beschrieben. Die bekannten Polyarylenether weisen üblicherweise Halogen-, insbesondere -F oder -Cl, oder phenolische OH- bzw. Phenolat-Endgruppen auf, wobei letztere als solche oder in umgesetzter Form, insbesondere in Form von -OCH₃-Endgruppen, vorliegen können.

Vorzugsweise weisen die Polyarylenether (A1) höchstens 0,01 Gew.-%, besonders bevorzugt höchstens 0,005 Gew.-% phenolische Endgruppen bezogen auf die Gewichtsmenge der Komponente (A1) auf. Vorzugsweise weisen die Polyarylenether (A2) mindestens 0,15 Gew.-%, insbesondere mindestens 0,18 Gew.-%, besonders bevorzugt mindestens 0,2 Gew.-% phenolische Endgruppen bezogen auf die Gewichtsmenge der Komponente (A2), jeweils berechnet als Gewichtsmenge OH, auf.

Die jeweilige Obergrenze für den Gehalt phenolischer Endgruppen in den Komponenten (A1) bzw. (A2) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Vorzugsweise beträgt die mittlere Anzahl der phenolischen Endgruppen der Komponente (A1) pro Polymerkette von 0 bis 0,2, insbesondere von 0 bis 0,1, besonders bevorzugt von 0 bis 0,05, ganz besonders bevorzugt von 0 bis 0,02, insbesondere bevorzugt höchstens 0,01.

Sofern die erfindungsgemäßen thermoplastischen Formmassen einen Polyarylenether (A2) enthalten, so beträgt das Gewichtsverhältnis der Komponente A1 zu Komponente A2 vorzugsweise von 50 zu 1 bis 2 zu 1, insbesondere von 25 zu 1 bis 5 zu 1, besonders bevorzugt von 20 zu 1 bis 10 zu 1.

Vorzugsweise beträgt die mittlere Anzahl der phenolischen Endgruppen der Komponente (A2) pro Polymerkette von 1,6 bis 2, insbesondere von 1,7 bis 2, besonders bevorzugt von 1,8 bis 2, ganz besonders bevorzugt von 1,9 bis 2.

Die Polyarylenether (A1) und (A2) gemäß der vorliegenden Erfindung können - abgesehen von den Endgruppen - gleich sein oder aus unterschiedlichen Bausteinen aufgebaut sein und/oder ein unterschiedliches Molekulargewicht aufweisen, sofern sie dann noch miteinander vollständig mischbar sind.

Sofern die erfindungsgemäßen thermoplastischen Formmassen einen Polyarylenether (A2) enthalten, so ist bevorzugt, wenn die Bestandteile (A1) und (A2) strukturell eine weitgehende Übereinstimmung aufweisen, insbesondere aus denselben Bausteinen aufgebaut sind und ein ähnliches Molekulargewicht aufweisen, insbesondere das zahlenmittlere Molekulargewicht der einen Komponente höchstens 30% größer ist als das der anderen Komponente.

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (A1) und ggf. (A2) in Betracht. Entsprechende Methoden werden weiter unten erläutert.

Bevorzugte Polyarylenether (A1) und ggf. (A2) sind unabhängig voneinander aus Bausteinen der allgemeinen Formel I aufgebaut: 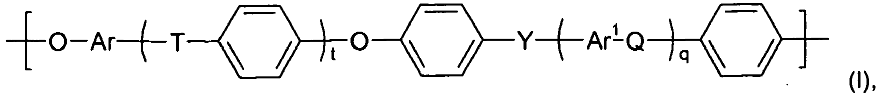 wobei die Symbole t, q, Q, T, Y, Ar und Ar¹ folgende Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylenether (A1) und (A2) sind solche, die mindestens eine der folgenden Bausteine Ia bis Io als wiederkehrende Struktureinheiten enthalten:

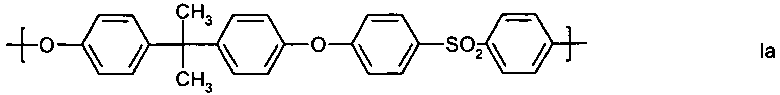

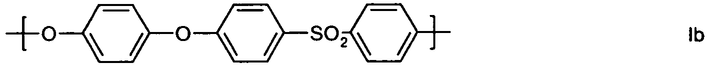

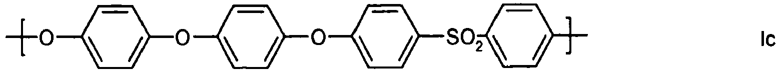

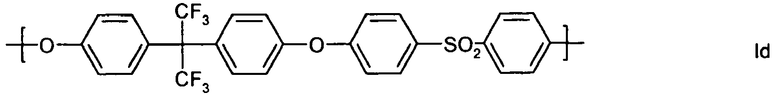

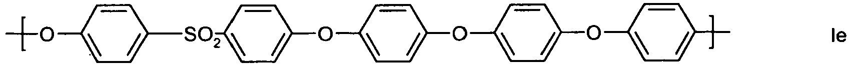

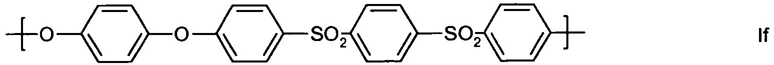

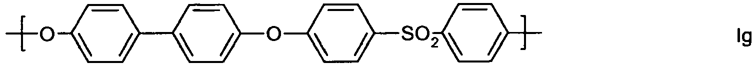

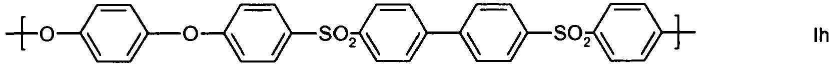

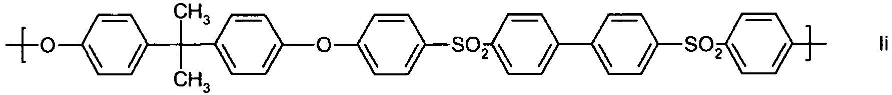

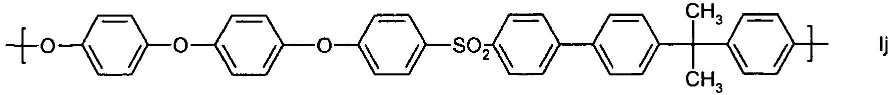

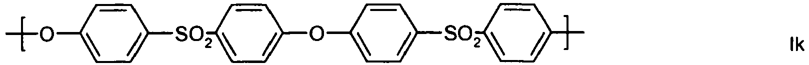

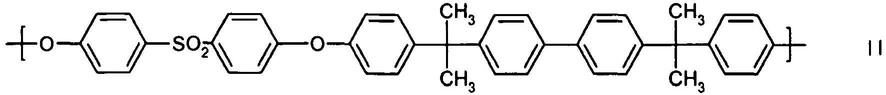

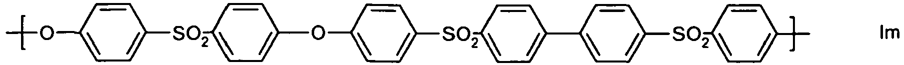

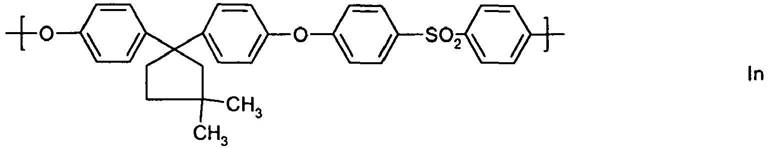

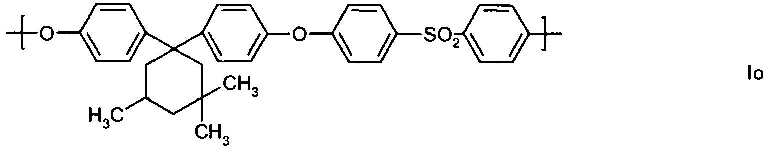

Zusätzlich zu den bevorzugten Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine Ia, Ig und Ik. Es ist außerdem besonders bevorzugt, wenn die Polyarylenether der Komponente (A1) und ggf. (A2) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone (A1) bzw. (A2) werden als Polyphenylensulfon (PPSU) bezeichnet.

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone (A1) bzw. (A2) werden als Polysulfon (PSU) bezeichnet.

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone (A1) bzw. (A2) werden als Polyethersulfon (PESU) bezeichnet. Diese Ausführungsform ist ganz besonders bevorzugt.

Abkürzungen wie PPSU, PESU und PSU entsprechen im Rahmen der vorliegenden Erfindung der DIN EN ISO 1043-1:2001.

Im Allgemeinen weisen die bevorzugten Polyarylenether (A1) und ggf. (A2) mittlere Molekulargewichte Mₙ (Zahlenmittel) im Bereich von 5.000 bis 60.000 g/mol und relative Viskositäten von 0,20 bis 0,95 dl/g auf. Die relativen Viskositäten der Polyarylenether werden in 1 gew.-%iger N-Methylpyrrolidon-Lösung bei 25°C nach DIN EN ISO 1628-1 bestimmt.

Die Polyarylenether (A1) und ggf. (A2) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether (A1) entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A1) sind Halogen, insbesondere Chlor, Alkoxy, insbesondere Methoxy, Aryloxy, insbesondere Phenoxy, oder Benzyloxy.

Im Folgenden wird die Herstellung der Polyarylenether (A2) diskutiert. Ein bevorzugtes Verfahren zur Herstellung von Polyarylenethern der Komponente (A2) wird nachfolgend beschrieben und umfasst folgende Schritte in der Reihenfolge a-b-c:
(a) Bereitstellung mindestens eines Polyarylenethers (A2*) in Gegenwart eines Lösungsmittels (L), der eine der gewünschten Komponente (A2) entsprechenden Gehalt an phenolischen Endgruppen aufweist, wobei dessen phenolische Endgruppen als Phenolat-Endgruppen vorliegen, und der vorzugsweise aufgebaut ist aus Bausteinen der allgemeinen Formel I wie oben definiert,
(b) Zugabe mindestens einer Säure, vorzugsweise mindestens einer mehrfunktionellen Carbonsäure, und
(c) Gewinnung der Polyarylenether der Komponente (A2) als Feststoff.

Die Bereitstellung des Polyarylenethers (A2*) erfolgt dabei bevorzugt in Form einer Lösung im Lösungsmittel (L).

Die Bereitstellung der beschriebenen Polyarylenether (A2*) kann im Prinzip auf verschiedene Weise erfolgen. Beispielsweise kann ein entsprechender Polyarylenether (A2*) direkt mit einem geeigneten Lösungsmittel in Kontakt gebracht und direkt, d. h. ohne weitere Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (A2*) in Gegenwart des Lösungsmittels entstehen.

Die Bereitstellung des Polyarylenethers oder der Polyarylenether (A2*) in Schritt (a) erfolgt jedoch vorzugsweise durch Umsetzung mindestens einer Ausgangsverbindung der Struktur X-Ar-Y (s1) mit mindestens einer Ausgangsverbindung der Struktur HO-Ar¹-OH (s2) in Gegenwart eines Lösungsmittels (L) und einer Base (B), wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

Das Verhältnis von (s1) und (s2) wird dabei so gewählt, dass der gewünschte Gehalt an phenolischen Endgruppen entsteht. Geeignete Ausgangsverbindungen sind dem Fachmann bekannt oder können nach bekannten Methoden hergestellt werden. Hydrochinon, Resorcin, Dihydroxynaphthalin, insbesondere 2,7- Dihydroxynaphthalin, 4,4'-Dihydroxydiphenylsulfon, Bisphenol A und 4,4'-Dihydroxybiphenyl sind als Ausgangsverbindung (s2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (s2) zum Einsatz kommt, ist 1,1,1-Tris(4-hydroxyphenyl)ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an (s2) zu bevorzugen.

Besonders bevorzugt beträgt das Molverhältnis (s2)/(s1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (s1) mit X = Halogen und Y = OH eingesetzt werden. In diesem Fall erfolgt die Einstellung eines Überschusses von Hydroxygruppen durch Zugabe der Ausgangsverbindung (s2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Bevorzugte Lösungsmittel (L) sind aprotische polare Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan, N-Ethyl-2-pyrrolidon und N-Methyl-2-pyrrolidon.

Vorzugsweise erfolgt die Umsetzung der Ausgangsverbindungen (s1) und (s2) in den genannten aprotischen polaren Lösungsmitteln (L), insbesondere N-Methyl-2-pyrrolidon.

Dem Fachmann ist an sich bekannt, dass die Umsetzung der phenolischen OH-Gruppen vorzugsweise in Gegenwart einer Base (B) erfolgt, um die Reaktivität gegenüber den Halogensubstituenten der Ausgangsverbindung (s1) zu erhöhen. Vorzugsweise sind die Basen (B) wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (s1) und (s2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (A2*) bezogen auf das Gesamtgewicht der Mischung aus Polyarylenether (A2*) und Lösungsmittel (L) von 10 bis 70 Gew.-%, vorzugsweise von 15 bis 50 Gew.-% einzustellen.

Im Rahmen von Schritt (b) erfolgt die Zugabe mindestens einer Säure, vorzugsweise mindestens einer mehrfunktionellen Carbonsäure zum Polyarylenether (A2*) aus Schritt (a), vorzugsweise zur Lösung des Polyarylenethers (A2*) im Lösungsmittel (L).

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur II:

HOOC-R-COOH (II),

wobei R ein Kohlenwasserstoffrest mit von 2 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bernsteinsäure, Glutarsäure, Adipinsäure, und Tricarbonsäuren, insbesondere Zitronensäure. Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) eine mehrfunktionelle Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an phenolischen Endgruppen zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Im Rahmen von Schritt (c) erfolgt die Gewinnung des Polyarylenethers (A2) als Feststoff. Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrrolidon, und einem Nicht-Lösungsmittel, insbesondere Wasser, verwendet wird, dann ist ein Mischungsverhältnis Lösungsmittel:Nicht-lösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Komponente (A2) weist vorzugsweise einen Kaliumgehalt von höchstens 600 ppm auf. Der Kaliumgehalt wird mittels Atomspektrometrie bestimmt.

### Komponente B

Die erfindungsgemäßen Formmassen enthalten als Komponente (B) mindestens ein Polyarylensulfid. Als Komponente (B) kommen prinzipiell alle Polyarylensulfide in Betracht.

Komponente (B) liegt in den erfindungsgemäßen thermoplastischen Formmassen vorzugsweise in Mengen von 5 bis 65 Gew.-%, besonders bevorzugt von 5 bis 45 Gew.-%, insbesondere von 5 bis 30 Gew.-%, ganz besonders bevorzugt von 10 bis 20 Gew.-% vor, jeweils bezogen auf die Gesamtmenge der Komponenten (A) bis (F).

Vorzugsweise bestehen die Polyarylensulfide der Komponente (B) von 30 bis 100 Gew.-% aus Wiederholungseinheiten gemäß der allgemeinen Formel -Ar-S-, wobei-Ar- eine Arylengruppe mit 6 bis 18 Kohlenstoffatomen darstellt.

Bevorzugt werden Polyarylensulfide, die mindestens 30 Gew.-%, insbesondere mindestens 70 Gew.-% Wiederholungseinheiten III:

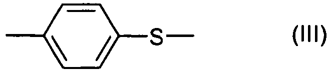

Bezogen auf das Gesamtgewicht aller Wiederholungseinheiten enthalten. Geeignete weitere Wiederholungseinheiten sind insbesondere 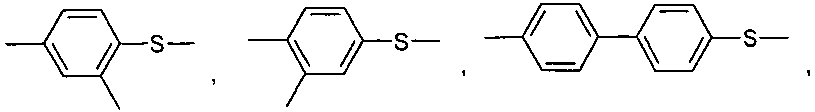 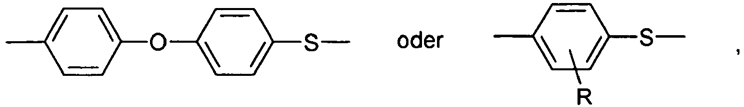 worin R C₁-bisC₁₀-Alkyl, bevorzugt Methyl bedeutet. Die Polyarylensulfide können Homopolymere, statistische Copolymere oder Blockcopolymere sein, wobei Homopolymere (identische Wiederholungseinheiten) bevorzugt sind. Ganz besonders bevorzugte Polyarylensulfide bestehen zu 100 Gew.-% aus Wiederholungseinheiten gemäß der allgemeinen Formel III. Besonders bevorzugt ist Komponente (B) somit ein Polyphenylensulfid, insbesondere Poly(1,4-phenylensulfid).

Als Endgruppen der erfindungsgemäß verwendeten Polyarylensulfide kommen insbesondere Halogen, Thiol oder Hydroxy, bevorzugt Halogen in Betracht.

Die Polyarylensulfide der Komponente (B) können verzweigt oder unverzweigt sein. Vorzugsweise sind die Polyarylensulfide der Komponente (B) linear, d. h. nicht verzweigt.

Die Polyarylensulfide der Komponente (B) weisen vorzugsweise gewichtsmittlere Molekulargewichte von 5.000 bis 100.000 g/mol auf.

Derartige Polyarylensulfide sind an sich bekannt oder können nach bekannten Methoden hergestellt werden. Entsprechende Herstellungsmethoden sind beispielsweise in Hans R. Kricheldorf, "Aromatic Polyethers" in: Handbook of Polymer Synthesis, second edition, 2005 auf den Seiten 486 bis 492 beschrieben.

Insbesondere können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. der US 3,354,129 zu entnehmen ist. Weitere Verfahren sind in der US 3,699,087 und in der US 4,645,826 beschrieben.

### Komponente C

Erfindungsgemäß enthalten die thermoplastischen Formmassen als Komponente (C) mindestens ein hyperverzweigtes Polymer ausgewählt aus hyperverzweigten Polycarbonaten und hyperverzweigten Polyestern.

Die erfindungsgemäßen Formmassen enthalten vorzugsweise von 0,1 bis 10, insbesondere von 0,1 bis 5 und besonders bevorzugt von 0,5 bis 3 Gew.-% der Komponente (C) bezogen auf die Gesamtmenge der Komponenten (A) bis (F).

Der Begriff "hyperverzweigt" bedeutet im Rahmen der vorliegenden Erfindung, dass der Verzweigungsgrad DB (degree of branching) der betreffenden Polymere, der definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, von 10 bis 99 %, bevorzugt von 25 bis 90 % und besonders bevorzugt von 30 bis 80 % beträgt. Der Begriff "hyperverzeigt" wird im Rahmen der vorliegenden Erfindung synonym zu "hochverzweigt" verwendet. Hyperverzweigte Polymere sind von den Dendrimeren zu unterscheiden. Zur Definition des "Degree of Branching" siehe H. Frey et al., Acta Polym. 1997, 48, 30. Zur Definition des Begriffes "hyperverzweigt" siehe Sunder et al., Chem. Eur. J. 2000, 6 (14), 2499-2506.

Dendrimere sind Polymere mit perfekt symmetrischer Struktur und lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen. Dabei vervielfältigt sich mit jedem Verknüpfungsschritt die Zahl der Monomerendgruppen (und damit der Verknüpfungen), und man erhält Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften in vielen Fällen vorteilhaft, beispielsweise beobachtet man eine geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt werden müssen und Reinigungsoperationen erforderlich sind, weshalb man Dendrimere üblicherweise nur im Labormaßstab herstellt.

Jedoch kann man mit großtechnischen Verfahren hyperverzweigte Polymere herstellen. Die hyperverzweigten Polymere weisen neben perfekten dendritischen Strukturen auch lineare Polymerketten und ungleiche Polymeräste auf, was jedoch die Polymereigenschaften verglichen zu denen der perfekten Dendrimere nicht wesentlich verschlechtert. Hyperverzweigte Polymere lassen sich insbesondere über zwei Synthesewege herstellen, die als AB₂ und Aₓ+B_{y} bekannt sind. Darin stehen A und B für verschiedene Monomerbausteine und die Indices x und y für die Anzahl der reaktiven funktionellen Gruppen, die in A bzw. B enthalten sind, also für die Funktionalität von A bzw. B. Beim AB₂-Weg wird ein trifunktionelles Monomer mit einer reaktiven Gruppe A und zwei reaktiven Gruppen B zu einem hoch- oder hyperverzweigten Polymer umgesetzt. Bei der Aₓ und By-Synthese, dargestellt am Beispiel der A₂+B₃-Synthese, setzt man ein difunktionelles Monomer A₂ mit einem trifunktionellen Monomer B₃ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann.

Durch den oben definierten Verzweigungsgrad unterscheiden sich die erfindungsgemäß verwendeten (nicht-dendrimeren) hyperverzweigten Polymere von den Dendrimeren. "Dendrimer" sind im Zusammenhang mit der vorliegenden Erfindung die Polymere dann, wenn ihr Verzweigungsgrad DB von 99,9 bis 100 % beträgt. Damit weist ein Dendrimer die maximal mögliche Anzahl an Verzweigungsstellen auf, welche nur durch einen hochsymmetrischen Aufbau erreicht werden kann.

Bevorzugte hyperverzweigte Polycarbonate weisen eine OH-Zahl von 1 bis 600, vorzugsweise 10 bis 550 und insbesondere von 50 bis 550 mg KOH/g Polycarbonat (gemäß DIN 53240, Teil 2) auf und werden im Folgenden als hyperverzweigte Polycarbonate C1) bezeichnet.

Bevorzugte hyperverzweigte Polyester sind solche des Typs Aₓ B_{y}, wobei A und B unterschiedliche Monomerbausteine kennzeichnen und x mindestens 1, insbesondere mindestens 1,1 sowie y mindestens 2, insbesondere mindestens 2,1 beträgt, und wer-den im Folgenden als hyperverzweigte Polyester C2) bezeichnet.

Unter hyperverzweigten Polycarbonaten C1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen.

Vorzugsweise weisen die bevorzugten hyperverzweigten Polycarbonate C1) ein Zahlenmittel des Molekulargewichtes Mn von 100 bis 15000, vorzugsweise von 200 bis 12000 und insbesondere von 500 bis 10000 g/mol (GPC, Standard PMMA) auf. Die Glasübergangstemperatur Tg beträgt insbesondere von -80°C bis +140, vorzugsweise von -60 bis 120°C (gemäß DSC, DIN 53765). Insbesondere beträgt die Viskosität bei 23°C (gemäß DIN 53019) von 50 bis 200.000 mPas, insbesondere von 100 bis 150000 mPas und ganz besonders bevorzugt von 200 bis 100.000 mPas.

Hyperverzweigte Polycarbonate sind an sich bekannt oder können nach an sich bekannten Methoden hergestellt werden.

Hyperverzweigte Polycarbonate C1) sind vorzugsweise erhältlich durch ein Verfahren, welches mindestens die folgenden Schritte umfasst:
- Alternative aa) Umsetzung mindestens eines organischen Carbonats (G) der allgemeinen Formel RO[(CO)]ₙOR mit mindestens einem aliphatischen, aliphatisch/aromatisch oder aromatischen Alkohol (H), welcher mindestens 3 OH-Gruppen aufweist, unter Eliminierung von Alkoholen ROH zu einem oder mehreren Kondensationsprodukten (K), wobei es sich bei R jeweils unabhängig voneinander um einen geradkettigen oder verzweigten aliphatischen, aromatisch/aliphatischen oder aromatischen Kohlenwasserstoffrest mit 1 bis 20 C-Atomen handelt, und wobei die Reste R auch unter Bildung eines Ringes miteinander verbunden sein können und n eine ganze Zahl zwischen 1 und 5 darstellt, oder
- Alternative ab) Umsetzung von Phosgen, Diphosgen oder Triphosgen mit o.g. Alkohol (H) unter Chlorwasserstoffeliminierung sowie anschließend an aa) bzw. ab)
- intermolekulare Umsetzung der Kondensationsprodukte (K) zu einem hochfunktionellen, hoch- oder hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Als Ausgangsmaterial kann Phosgen, Diphosgen oder Triphosgen eingesetzt werden, wobei organische Carbonate bevorzugt sind.

Bei den Resten R der als Ausgangsmaterial eingesetzten organischen Carbonate (G) der allgemeinen Formel RO(CO)ₙOR handelt es sich jeweils unabhängig voneinander um einen geradkettigen oder verzweigten aliphatischen, aromatisch/aliphatisch oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel RO(CO)ₙOR eingesetzt; n beträgt vorzugsweise 1 bis 3, insbesondere 1.

Entsprechende Dialkyl- oder Diarylcarbonate sind bekannt und können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOx hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylcarbonat oder Didodecylcarbonat.

Beispiele für Carbonate, bei denen n größer 1 ist, umfassen Dialkyldicarbonate, wie Di(-t-butyl)dicarbonat oder Dialkyltricarbonate wie Di(-t-butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate (G) werden mit mindestens einem aliphatischen Alkohol (H), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol" Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (H') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3,5-trimethylcyclohexan, Resorcin, Hydrochinon, 4,4'-Dihydroxyphenyl, Bis-(4-Bis(hydroxy-phenyl)sulfid, Bis(4-Hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen H') zu den mindestens trifunktionellen Alkoholen (H) vom Fachmann je nach den gewünschten Eigenschaften des Polycarbonates festgelegt. Im Regelfall beträgt die Menge des oder der Alkohole (H') 0 bis 39,9 mol-% bezüglich der Gesamtmenge aller Alkohole (H) und (H') zusammen. Bevorzugt beträgt die Menge 0 bis 35 mol-%, besonders bevorzugt 0 bis 25 mol-% und ganz besonders bevorzugt 0 bis 10 mol-%.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hyperverzweigten Polycarbonat erfolgt unter Eliminierung des monofunktionellen Alkohols oder Phenols aus dem Carbonat-Molekül.

Die nach dem bevorzugten Verfahren gebildeten hochfunktionellen hyperverzweigten Polycarbonate C1) sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end- oder seitenständige funktionelle Gruppen auf.

Bei der Herstellung der hochfunktionellen Polycarbonate C1) ist es notwendig, das Verhältnis von den OH-Gruppen enthaltenden Verbindungen zu Phosgen oder Carbonat so einzustellen, dass das resultierende einfachste Kondensationsprodukt (im Folgenden Kondensationsprodukt (K) genannt) im Mittel entweder eine Carbonatgruppe oder Carbamoylgruppe und mehr als eine OH-Gruppe oder eine OH-Gruppe und mehr als eine Carbonatgruppe oder Carbamoylgruppe enthält. Die einfachste Struktur des Kondensationsproduktes (K) aus einem Carbonat (G) und einem Di- oder Polyalkohol ergibt dabei die Anordnung XYₙ oder YₙX, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im Folgenden generell "fokale Gruppe" genannt.

Entsprechende Umsetzungen von Carbonaten (G) mit Di- oder Polyalkoholen bei verschiedenen Umsetzungsverhältnissen, optional in Gegenwart zusätzlicher difunktioneller Verbindungen als Kettenverlängerer sind bekannt und werden beispielsweise in der WO 2008/074687 von Seite 13, Zeile 29 bis Seite 18, Zeile 12 offenbart, dessen Inhalt hiermit ausdrücklich einbezogen wird.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

In einer weiteren bevorzugten Ausführungsform können die bevorzugten Polycarbonate C1) neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan, Tris(hydroxyethyl)aminomethan, Ethylen-diamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen oder Harnstoffgruppen aufweisende Polycarbonate. Durch Zugabe von Dicarbonsäuren, Tricarbonsäuren, z.B. Terephthalsäuredimethyl-ester oder Tricarbonsäureester lassen sich Estergruppen erzeugen.

Eine nachträgliche Funktionalisierung kann man erhalten, indem das erhaltene hochfunktionelle hyperverzweigte Polycarbonat in einem zusätzlichen Verfahrensschritt (Schritt c)) mit einem geeigneten Funktionalisierungsreagenz, welches mit den OH-und/oder Carbonat-Gruppen oder Carbamoylgruppen des Polycarbonates reagieren kann, umsetzt.

Hydroxylgruppen enthaltende hochfunktionelle hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Als bevorzugtes hyperverzweigtes Polymer können die erfindungsgemäßen Formmassen mindestens einen hyperverzweigten Polyester C2) des Typs AₓB_{y} enthalten, wobei x mindestens 1, insbesondere mindestens 1,1 vorzugsweise mindestens 1,3, besonders bevorzugt mindestens 2 und y mindestens 2, insbesondere mindestens 2,1, vorzugsweise mindestens 2,5, besonders bevorzugt mindestens 3 beträgt.

Unter einem Polyester des Typs AₓB_{y} versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern C2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen.

Die hyperverzweigten Polyester C2) weisen vorzugsweise ein Mn von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weisen die hyperverzweigten Polyester C2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester. Die Tg beträgt vorzugsweise von -50°C bis 140°C und insbesondere von -50 bis 100°C (mittels DSC, nach DIN 53765).

Insbesondere solche hyperverzweigten Polyester C2) sind bevorzugt, in denen mindestens eine OH- bzw. COOH-Zahl größer 0, vorzugsweise größer 0,1 und insbesondere größer 0,5 ist.

Die bevorzugten hyperverzweigten Polyester C2) sind vorzugsweise erhältlich, indem man
(a) eine oder mehrere Dicarbonsäuren oder eines oder mehrere Derivate derselben mit einem oder mehreren mindestens trifunktionellen Alkoholen oder
(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester C2) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören insbesondere Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure, wobei die oben genannten Dicarbonsäuren substituiert sein können mit einem oder mehreren Resten, ausgewählt aus
- C₁-C₁₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
- C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- Alkylengruppen wie Methylen oder Ethyliden oder
- C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als geeignete Vertreter für substituierte Dicarbonsäuren seien genannt: 2-Methylmalonsäure, 2-Ethylmalonsäure, 2-Phenylmalonsäure, 2-Methylbemsteinsäure, 2-Ethylbemsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure. Weiterhin lassen sich Gemische von zwei oder mehreren der vorgenannten Vertreter einsetzen. Die Dicarbonsäuren lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester, ferner
- Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure. Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner
- Mono-, Di- oder Trivinylester sowie
- gemischte Methylethylester.

Im Rahmen der vorliegenden Erfindung ist es auch möglich, ein Gemisch aus einer Trioder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente C2) zu erhalten.

Als Diole für Variante (b) des bevorzugten Verfahrens verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H oder Gemische von zwei oder mehr Vertretern der voranstehenden Verbindungen, wobei n eine ganze Zahl ist und n = 4 bis 25 beträgt. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Das Molverhältnis der Moleküle A zu Molekülen B im AₓB_{y}-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen. Beispielsweise kann es sich bei dem Triol um ein Triol handeln, welches primäre und sekundäre Hydroxylgruppen aufweist, bevorzugtes Beispiel ist Glycerin. Bei der Durchführung der erfindungsgemäßen Umsetzung nach Variante (a) arbeitet man bevorzugt in Abwesenheit von Diolen und monofunktionellen Alkoholen. Bei der Durchführung der erfindungsgemäßen Umsetzung nach Variante (b) arbeitet man bevorzugt in Abwesenheit von mono- oder Dicarbonsäuren.

Die Herstellung der gemäß der vorliegenden Erfindung bevorzugten hyperverzweigten Polyester C2) ist bekannt und wird beispielsweise in der WO 2007/074687 auf Seite 24, Zeile 37 bis Seite 28, Zeile 33 offenbart.

Die bevorzugten hyperverzweigten Polyester C2) haben ein Molekulargewicht Mw von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Vorzugsweise sind die hochfunktionellen hyperverzweigten Polyester C2) carboxyterminiert, carboxy- und Hydroxylgruppen-terminiert und besonders bevorzugt Hydroxylgruppen-terminiert.

Sofern hyperverzweigte Polymere des Typs C1) und C2) in Mischung eingesetzt werden, so beträgt das Gewichtsverhältnis der Komponente C1) zu C2) vorzugsweise von 1 : 20 bis 20 : 1, insbesondere von 1 : 15 bis 15 : 1 und ganz besonders von 1 : 5 bis 5 : 1.

Bei den eingesetzten hyperverzweigten Polycarbonaten C1) und Polyestern C2) handelt es sich jeweils vorzugsweise um Partikel mit einer Größe von 20 bis 500 nm, insbesondere von 30 bis 400 nm, ganz besonders bevorzugt von 50 bis 300 nm. Diese Nanopartikel liegen im Polymerblend fein verteilt vor, die Größe der Partikel im Compound beträgt von 20 bis 500 nm, vorzugsweise von 50 bis 300 nm.

### Komponente D

Vorzugsweise enthalten die thermoplastischen Formassen mindestens einen funktionalisierten Polyarylenether umfassend Carboxylgruppen, insbesondere solche mit einer Viskositätszahl gemäß DIN EN ISO 1628-1 von 45 bis 65 ml/g gemessen in 1 gew.-%iger Lösung in N-Methyl-2-pyrrolidon bei 25°C. Die Viskositätszahl gemäß DIN EN ISO 1628-1 der funktionalisierten Polyarylenether der Komponente (D) gemessen in 1 gew.-%iger Lösung in N-Methyl-2-pyrrolidon bei 25°C beträgt vorzugsweise mindestens 46 ml/g, besonders bevorzugt mindestens 47 ml/g, insbesondere mindestens 48 ml/g. Komponente D unterscheidet sich somit von Komponente A insbesondere dadurch, dass Komponente D im Gegensatz zu Komponente A mit Carboxylgruppen funktionalisiert ist.

Die Verwendung von Polyarylenethern umfassend Carboxylgruppen mit einer Viskositätszahl gemäß DIN EN ISO 1628-1 von mehr als 65 ml/g gemessen in 1 gew.-%iger Lösung in N-Methyl-2-pyrrolidon bei 25°C führt im Allgemeinen zu einer nachteiligen Reduktion der Fließfähigkeit, ohne dass eine weitere Verbesserung der mechanischen Eigenschaften erhalten wird. Dementsprechend ist die Viskositätszahl gemäß DIN EN ISO 1628-1 der Polyarylenether der Komponente (D) vorzugsweise nach oben beschränkt und beträgt bevorzugt höchstens 65 ml/g, besonders bevorzugt höchstens 61 ml/g, insbesondere höchstens 57 ml/g, jeweils gemessen in 1 gew.-%iger Lösung in N-Methyl-2-pyrrolidon bei 25°C.

Eine Viskositätszahl im angegebenen Bereich führt in thermoplastischen Formmassen auf Basis von Polyarylenethern und Polyarylensulfiden enthaltend teilchen- oder faserförmige Füllstoffe in Kombination mit der erfindungsgemäßen Komponente (C) zu verbesserten mechanischen Eigenschaften und zu einer besonders günstigen Fließfähigkeit. Ohne sich einschränken zu wollen, besteht die Vorstellung, dass die funktionalisierten Polyarylenether der Komponente (D) aufgrund ihrer chemischen Struktur und der definierten Viskositätszahl synergistisch mit den Füllstoffen, insbesondere Glasfasern, wechselwirken.
Vorzugsweise enthalten die erfindungsgemäßen thermoplastischen Formmassen als Komponente (D) mindestens einen funktionalisierten Polyarylenether, der Bausteine der allgemeinen Formel I wie im Rahmen von Komponente (A1) bzw. (A2) definiert sowie Bausteine der allgemeinen Formel IV enthält: 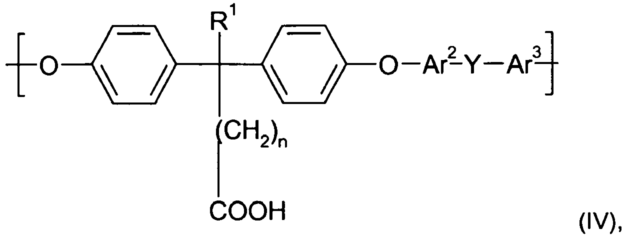 worin
- n: 0, 1, 2, 3, 4, 5 oder 6 ist;
- R¹: Wasserstoff, eine C₁ bis C₆-Alkylgruppe, oder -(CH₂)ₙ-COOH bedeutet;
- Ar² und Ar³: gleich oder unterschiedlich sein können und unabhängig voneinander eine C₆ bis C₁₈-Arylengruppe darstellen und
- Y: eine chemische Bindung oder Gruppe wiedergibt, die ausgewählt ist aus -O-, -S-, -SO₂-, S=O, C=O, -N=N- und -CR^{a}R^{b}-, wobei R^{a} und R^{b} gleich oder ungleich sein können und unabhängig voneinander jeweils für ein Wasserstoffatom oder eine C₁-C₁₂-Alkyl-, C₁-C₁₂-Alkoxy- oder C₆ bis C₁₈-Arylgruppe stehen.

Vorzugsweise beträgt der Anteil von Bausteinen gemäß der allgemeinen Formel IV bezogen auf die Summe der Bausteine gemäß Formel I und Formel IV von 0,5 bis 3 mol-%, vorzugsweise von 0,6 bis 2 mol-%, besonders bevorzugt von 0,7 bis 1,5 mol-%.

Der Anteil von Bausteinen gemäß der allgemeinen Formel IV bezogen auf die Summe der Bausteine gemäß Formel I und Formel IV wird im Rahmen der vorliegenden Erfindung grundsätzlich mittels ¹H-NMR-Spektroskopie mit einer definierten Menge 1,3,5-Trimethoxybenzol als interner Standard bestimmt. Die Umrechnung von Gew.-% in mol-% ist dem Fachmann bekannt.

Im Rahmen der allgemeinen Formel IV gilt vorzugsweise n = 2 und R¹ = Methyl. Im Rahmen der allgemeinen Formel IV gilt zudem vorzugsweise Ar² = Ar³ = 1,4-Phenylen und Y = -SO₂-.

Die in den erfindungsgemäßen Formmassen verwendeten, funktionalisierten Polyarylenether (Komponente D) sind an sich bekannte Verbindungen oder sind nach bekannten Verfahren herstellbar.

Beispielsweise sind die funktionalisierten Polyarylenether der Komponente (D) zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach insbesondere erhältlich durch Polykondensation von Verbindungen der allgemeinen Formel V: 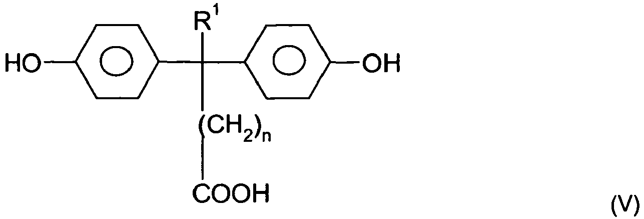 worin R¹ und n die oben angegebenen Bedeutungen besitzen, mit wenigstens einer weiteren gegenüber den Verbindungen der allgemeinen Formel V reaktiven aromatischen Verbindung, wie insbesondere 4,4'-Dichlordiphenylsulfon, und gegebenenfalls weiteren hydroxyfunktionalisierten Verbindungen, wie z.B. Bisphenol A und/oder Bisphenol S und/oder 4,4'-Dihydroxybiphenyl. Geeignete Reaktionspartner sind dem Fachmann allgemein bekannt.

Zur Herstellung der funktionalisierten Polyarylenether der Komponente (D) können prinzipiell auch die für Polyarylenether der Komponente (A1) verwendeten Methoden eingesetzt werden, wobei ebenfalls die Lösungspolymerisation in dipolar aprotischen Lösungsmitteln unter Baseneinwirkung bevorzugt wird.

Die Ausführungen bezüglich Komponente (A1) hinsichtlich bevorzugter Strukturelemente der allgemeinen Formel I gelten entsprechend für die funktionalisierten Polyarylenether der Komponente (D).

Insbesondere ist es bevorzugt, wenn die Polyarylenether der Komponenten (A1) und (D) strukturell ähnlich sind, insbesondere auf den gleichen Monomerbausteinen basieren und sich lediglich in Bezug auf die Bausteine der allgemeinen Formel IV im Rahmen der Komponente (D) unterscheiden. Es ist besonders bevorzugt, wenn sowohl Komponente (A1) als auch Komponente (D) auf Bausteinen des Typs PESU wie oben definiert oder wenn sowohl Komponente (A1) als auch Komponente (D) auf Bausteinen des Typs PPSU wie oben definiert oder wenn sowohl Komponente (A1) als auch Komponente (D) auf Bausteinen des Typs PSU wie oben definiert basieren. Unter "basieren" ist in diesem Zusammenhang zu verstehen, dass sowohl Komponente (A1) als auch Komponente (D) aus den gleichen Bausteinen aufgebaut sind und sich lediglich dadurch unterscheiden, dass die Komponente (D) zusätzlich funktionalisiert ist und vorzugsweise Monomerbausteine der allgemeinen Formel IV wie oben definiert enthält. Besonders bevorzugt enthalten die Polyarylenether der Komponente (A1) und die funktionalisierten Polyarylenether der Komponente (D) jeweils die gleichen Bausteine der allgemeinen Formel I.

Geeignete Bausteine im Rahmen der allgemeinen Formel IV sind insbesondere: 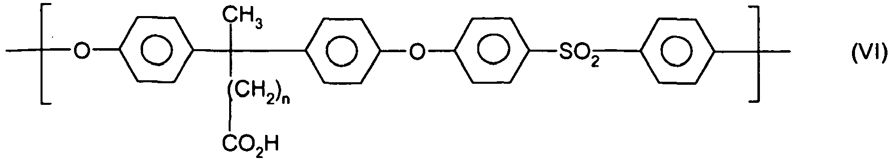 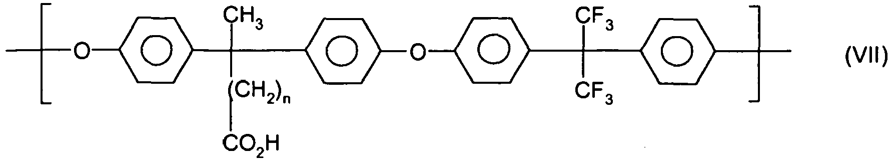 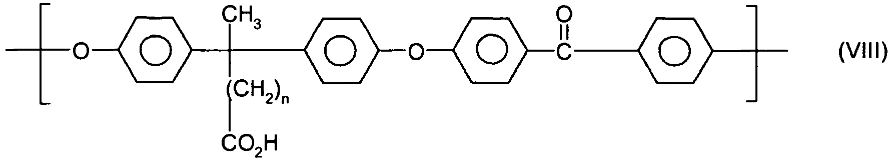 worin n jeweils für eine ganze Zahl von 0 bis 4 steht. Der Baustein VI ist ganz besonders bevorzugt.

### Komponente E

Die thermoplastischen Formmassen der vorliegenden Erfindung enthalten als Komponente (E) vorzugsweise mindestens einen faser- oder teilchenförmigen Füllstoff, besonders bevorzugt in einer Menge von 5 bis 70 Gew.-%, ganz besonders bevorzugt von 15 bis 70 Gew.-%, insbesondere von 15 bis 65 Gew.-%, bezogen auf insgesamt 100 Gew.-% der Komponenten (A) bis (F).

Die erfindungsgemäßen Formmassen können insbesondere teilchenförmige oder faserförmige Füllstoffe enthalten, wobei faserförmige Füllstoffe besonders bevorzugt sind.

Bevorzugte faserförmige Füllstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im Allgemeinen haben die verwendeten Kohlenstoff- und Glasfasern einen Durchmesser im Bereich von 6 bis 20 µm. Komponente (E) besteht somit besonders bevorzugt aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat und Kreide, gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die thermoplastischen Formmassen können außerdem weitere Zusatzstoffe und/oder Verarbeitungshilfsmittel als Komponente F enthalten.

### Komponente F

Die erfindungsgemäßen Formmassen können als Bestandteile der Komponente (F) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der Komponente (F) in der erfindungsgemäßen Formmasse beträgt insbesondere von 0 bis zu 30, vorzugsweise von 0 bis zu 20 Gew.-%, insbesondere 0 bis 15 Gew.-%, bezogen auf das Gesamtgewicht der Komponenten (A) bis (E). Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (E).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (F), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Fumace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (F) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (F) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (F)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (F) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

Die Reihenfolge, in der die Komponenten (A) bis (F) gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert. Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 380°C, bevorzugt 300 bis 370°C, erforderlich. Nach der Extrusion wird das Extrudat in der Regel abgekühlt und zerkleinert.

Die erfindungsgemäßen thermoplastischen Formmassen können vorteilhaft zur Herstellung von Formteilen, Fasern, Schäumen oder Filmen verwendet werden. Die erfindungsgemäßen Formmassen eignen sich insbesondere zur Herstellung von Formteilen für Haushaltsartikel, elektrische oder elektronische Bauteile sowie zur Herstellung von Formteilen für den Fahrzeugsektor, insbesondere Automobil.

Die folgenden Beispiele erläutern die Erfindung näher, ohne sie einzuschränken.

### Beispiele

Die E-Moduli, die Reißfestigkeit und die Reißdehnung der Proben wurden im Zugversuch nach ISO 527 an Schulterstäben ermittelt.

Die Schlagzähigkeit der Glasfasern enthaltenden Produkte wurde an ISO-Stäben nach ISO 179 1 eU bestimmt. Die Kerbschlagzähigkeit der unverstärkten Produkte wurde nach ISO 179 1eB bestimmt. Bei den unverstärkten Produkten wurde anstelle der Reißfestigkeit die Zugfestigkeit nach ISO 527 bestimmt.

Die Fließfähigkeit wurde anhand der Schmelzeviskosität beurteilt. Die Schmelzestabilität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1000 Hz bestimmten Werte.

Die Bestimmung der Anisotropie der Steifigkeit erfolgte an Platten wie folgt: Es wurden in einem Werkzeug mit Bandanguss Platten der Abmessung 150*150*3 mm³ hergestellt. Aus diesen Platten wurden jeweils 5 Zugstäbe mittels einer Hochgeschwindigkeitsfräse ausgearbeitet. Die Probekörper wurden entweder in Fließrichtung (y-Richtung) oder senkrecht dazu (x-Richtung) entnommen. An diesen Probekörpern wurde der E-Modul in Fließrichtung bzw. senkrecht zur Fließrichtung bestimmt.

Die Viskositätszahl der Polyarylenether wurde in 1 %-iger Lösung von N-Methylpyrrolidon bei 25°C gemäß DIN EN ISO 1628-1 bestimmt.

### Komponente A1

Als Komponente A1-1 wurde ein Polyethersulfon des Typs PESU mit einer Viskositätszahl von 49,0 ml/g (Ultrason^{®} E 1010 der BASF SE) verwendet. Das verwendete Produkt wies 0,16 Gew.-% Cl-Endgruppen und 0,21 Gew.-% OCH₃-Endgruppen auf.

### Komponente A2

Als Komponente A2-1 wurde ein Polyethersulfon mit einer Viskositätszahl von 55,6 ml/g verwendet, welches 0,20 Gew.-% OH-Endgruppen und 0,02 Gew.% Cl-Endgruppen aufwies.

### Komponente B

Als Komponente B-1 wurde ein Polyphenylensulfid mit einer Schmelzeviskosität von 145 Pa*s bei 330°C und einer Scherrate von 1000 Hz verwendet.

### Komponente C

Als Komponente C-1 wurde ein hyperverzweigtes Polycarbonat verwendet, welches wie folgt hergestellt wurde:

Der mehrfunktionelle Alkohol, Diethylcarbonat und 0,15 Gew.-% Kaliumcarbonat als Katalysator (Menge bezogen auf Menge Alkohol) wurden nach den Ansatzmengen gemäß Tabelle 1 in einem Dreihalskolben, ausgestattet mit Rührer, Rückflusskühler und Innenthermometer vorgelegt, die Mischung auf 140°C erwärmt, und 2 h bei dieser Temperatur gerührt. Mit fortschreitender Reaktionsdauer reduzierte sich dabei die Temperatur des Reaktionsgemisches bedingt durch die einsetzende Siedekühlung des freigesetzten Ethanols. Nun wurde der Rückflusskühler gegen einen absteigenden Kühler getauscht, bezogen auf die Äquivalentmenge Katalysator ein Äquivalent Phosphorsäure zugegeben, Ethanol abdestilliert und die Temperatur des Reaktionsgemisches langsam bis auf 160°C erhöht. Der abdestillierte Alkohol wurde in einem gekühlten Rundkolben gesammelt, ausgewogen und der Umsatz so gegenüber dem theoretisch möglichen Vollumsatz prozentual ermittelt (siehe Tabelle 1).

Anschließend wurde bei 160°C über einen Zeitraum von 1 h trockener Stickstoff durch das Reaktionsgemisch geleitet, um noch vorhandene Restmengen von Monomeren zu entfernen. Danach wurde das Reaktionsgemisch auf Raumtemperatur abgekühlt.

### Analytik der erfindungsgemäßen Polycarbonate:

Die Polycarbonate wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmethacrylat (PMMA) eingesetzt.

Die Bestimmung der OH-Zahl erfolgte nach DIN 53240, Teil 2.

**Tabelle 1: Einsatzstoffe und Endprodukte**

| Alkohol | Molverhältnis Alkohol zu Carbonat | Destillat, Alkoholmenge bez. auf Vollumsatz mol-% | Molekular-gewicht Produkt (g/mol) Mw Mn | OH-Zahl Produkt (mg KOH/g) nach DIN 53240, Teil 2 |
|---|---|---|---|---|
| TMP x 1,2 | 1:1 | 72 | 2300 | 400 |
| PO | | | 1500 | |

| | | | | |
|---|---|---|---|---|
| TMP = Trimethylolpropan PO = Propylenoxid | | | | |

Die Bezeichnung "TMP x 1,2 PO" beschreibt darin ein Produkt, das je mol Trimethylolpropan mit durchschnittlich 1,2 mol Propylenoxid umgesetzt worden ist.

### Komponente D

Als Komponente D-1 wurde ein funktionalisiertes Polyethersulfon verwendet, welches wie folgt hergestellt wurde:

Unter Stickstoffatmosphäre wurden 577,03 g Dichlordiphenylsulfon, 495,34 g Dihydroxydiphenylsulfon und 5,73 g 4,4'-Bis-hydroxyphenylvaleriansäure ("DPA") in 1053 ml NMP gelöst und mit 297,15 g wasserfreiem Kaliumkarbonat versetzt. Die Reaktionsmischung wurde auf 190°C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weiße Pulver wurde dann mehrfach mit heißem Wasser extrahiert und anschließend bei 140°C im Vakuum getrocknet. Der Anteil an DPA-Einheiten wurde mittels ¹H-NMR-Spektroskopie mit 1,3,5-Trimethoxybenzol als internem Standard zu 0,9 mol-% bestimmt, die Viskositätszahl des Produkts war 46,9 ml/g.

### Komponente E

Als Komponente E-1 wurden Schnittglasfasern mit einer Stapellänge von 4,5 mm und einem Faserdurchmesser von 10 µm eingesetzt, die mit einer Polyurethanschlichte versehen waren.

**Tabelle 2: Eigenschaften der Blends aus Polyarylenethern und Polyarylensulfiden enthaltend Glasfasern. Die Zusammensetzung der thermoplastischen Formmassen ist in Gewichtsteilen angegeben (V = Vergleichsversuch, n.b. = nicht bestimmt).**

| Versuch | V1 | 2 | 3 | V4 | 5 | 6 | V7 |
|---|---|---|---|---|---|---|---|
| Komponente A1-1 | 41 | 40,3 | 40 | 36 | 35,3 | 32,8 | 36 |
| Komponente A2-1 | - | - | - | - | - | 2,5 | 5 |
| Komponente B-1 | 14 | 13,7 | 13,5 | 14 | 13,7 | 13,7 | 14 |
| Komponente C-1 | - | 1 | 1,5 | - | 1 | 1 | - |
| Komponente D-1 | - | - | - | 5 | 5 | 5 | - |
| Komponente E-1 | 45 | 45 | 45 | 45 | 45 | 45 | 45 |
| E-Modul [GPa] | 16,5 | 16,9 | 17,1 | 16,5 | 17,2 | 17,1 | 16,5 |
| Reißdehnung [%] | 1,4 | 1,6 | 1,7 | 1,9 | 2,0 | 2,1 | 1,5 |
| Reißfestigkeit [MPa] | 148 | 161 | 162 | 161 | 167 | 169 | 152 |
| ISO 179 1eU [kJ/m²] | 42 | 48 | 49 | 52 | 53 | 58 | 44 |
| Viskosität bei 1000 Hz (350°C) | 554 | 487 | 423 | 567 | 479 | 414 | 562 |
| E-Modul einer Platte (Fließrichtung y) [GPa] | 12,6 | 14,1 | 14,3 | 12,7 | 13,9 | 14,0 | 12,7 |
| E-Modul einer Platte (x-Richtung) [GPa] | 7,9 | 9,7 | 10,3 | 8,2 | 9,8 | 9,9 | 7,9 |

Die erfindungsgemäßen Formmassen zeichnen sich gemäß Tabelle 2 durch eine verbesserte Fließfähigkeit bei gleichzeitig guten mechanischen Eigenschaften aus. Die erfindungsgemäßen Formmassen weisen insbesondere eine hohe Steifigkeit auf, deren Anisotropie geringer ist. Darüber hinaus ist die Schlagzähigkeit verbessert. Tabelle 3: Eigenschaften der Blends aus Polyarylenethern und Polyarylensulfiden. Die Zusammensetzung der thermoplastischen Formmassen ist in Gewichtsteilen angegeben.

| Versuch | V8 | 9 |
|---|---|---|
| Komponente A1-1 | 80 | 79,2 |
| Komponente A2-1 | - | - |
| Komponente B-1 | 20 | 19,8 |
| Komponente C-1 | - | 1 |
| Komponente D-1 | - | - |
| Komponente E-1 | - | - |
| E-Modul [GPa] | 2,85 | 2,84 |
| Reißdehnung [%] | >40 | >40 |
| Reißfestigkeit/Zugfestigkeit [MPa] | 82,1 | 82,3 |
| ISO 179 1 eB [kJ/m²] | 34 | 92 |
| Viskosität bei 1000 Hz (350°C) | 217 | 167 |

Die unverstärkten erfindungsgemäßen Formmassen weisen eine gegenüber dem Stand der Technik deutlich verbesserte Fließfähigkeit sowie eine deutlich verbesserte Kerbschlagzähigkeit auf.

## Patentansprüche

1. Thermoplastische Formmassen enthaltend folgende Komponenten:
(A1) mindestens ein Polyarylenether mit im Mittel höchstens 0,5 phenolischen Endgruppen pro Polymerkette,
(A2) optional mindestens ein Polyarylenether mit im Mittel mindestens 1,5 phenolischen Endgruppen pro Polymerkette,
(B) mindestens ein Polyarylensulfid,
(C) mindestens ein hyperverzweigtes Polymer ausgewählt aus hyperverzweigten Polycarbonaten und hyperverzweigten Polyestern,
(D) optional mindestens ein funktionalisierter Polyarylenether umfassend Carboxylgruppen,
(E) optional mindestens ein faser- oder teilchenförmiger Füllstoff und
(F) optional weitere Zusatzstoffe und/oder Verarbeitungshilfsmittel.

2. Thermoplastische Formmassen nach Anspruch 1, enthaltend von 20 bis 89,9 Gew.-% der Komponente (A1), von 0 bis 10 Gew.-% der Komponente (A2), von 5 bis 65 Gew.-% der Komponente (B), von 0,1 bis 5 Gew.-% der Komponente (C), von 0 bis 15 Gew.-% der Komponente (D), von 5 bis 70 Gew.-% der Komponente (E) und von 0 bis 40 Gew.-% der Komponente (F), wobei die Summe der Gew.-% der Komponenten (A) bis (F) bezogen auf die Gesamtmenge der Komponenten (A) bis (F) 100 Gew.-% ergibt.

3. Thermoplastische Formmassen nach Anspruch 1 oder 2, enthaltend von 20 bis 83,9 Gew.-% der Komponente (A1), von 1 bis 10 Gew.-% der Komponente (A2), von 5 bis 65 Gew.-% der Komponente (B), von 0,1 bis 5 Gew.-% der Komponente (C), von 0 bis 15 Gew.-% der Komponente (D), von 10 bis 70 Gew.-% der Komponente (E) und von 0 bis 40 Gew.-% der Komponente (F), wobei die Summe der Gew.-% der Komponenten (A) bis (F) bezogen auf die Gesamtmenge der Komponenten (A) bis (F) 100 Gew.-% ergibt.

4. Thermoplastische Formmassen nach einem oder mehreren der Ansprüche 1 bis 3, wobei die Polyarylenether (A1) im Mittel höchstens 0,1 phenolische Endgruppen pro Polymerkette und die Polyarylenether (A2) im Mittel mindestens 1,8 phenolische Endgruppen pro Polymerkette aufweisen.

5. Thermoplastische Formmassen nach einem oder mehreren der Ansprüche 1 bis 4, wobei Komponente (C) mindestens ein hyperverzweigtes Polycarbonat mit einer OH-Zahl von 1 bis 600 mg KOH/g Polycarbonat gemäß DIN 53240 enthält.

6. Thermoplastische Formmassen nach einem oder mehreren der Ansprüche 1 bis 5, wobei Komponente (C) mindestens einen hyperverzweigten Polyester des Typs AₓB_{y} mit x mindestens 1 und y mindestens 2 enthält.

7. Thermoplastische Formmassen nach einem oder mehreren der Ansprüche 1 bis 6, wobei die Polyarylenether der Komponenten (A1) und gegebenenfalls (A2) unabhängig voneinander aufgebaut sind aus Bausteinen der allgemeinen Formel I: 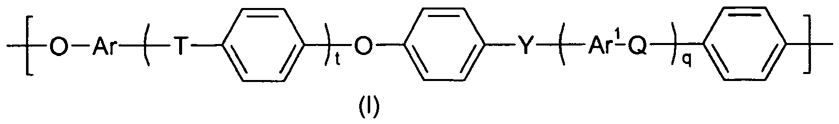 mit folgenden Bedeutungen
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy-oder C₆-C₁₈-Arylgruppe stehen, und wobei wenigstens eines aus Q, T und Y für -SO₂- steht und
Ar, Ar¹: unabhängig voneinander C₆-C₁₈-Arylengruppe.

8. Thermoplastische Formmassen nach Anspruch 7, wobei die Polyarylenether (A1) und (A2) aus den gleichen Bausteinen gemäß der allgemeinen Formel I aufgebaut sind.

9. Thermoplastische Formmassen nach Anspruch 7 oder 8, wobei Q, T und Y in Formel (I) unabhängig voneinander ausgewählt sind aus -O- und -SO₂- und wenigstens eines aus Q, T und Y für -SO₂- steht.

10. Thermoplastische Formmassen nach einem oder mehreren der Ansprüche 7 bis 9, wobei Ar und Ar¹ in Formel (I) unabhängig voneinander ausgewählt sind aus der Gruppe bestehend aus 1,4-Phenylen, 1,3-Phenylen, Naphthylen und 4,4'-Bisphenylen.

11. Thermoplastische Formmassen nach einem oder mehreren der Ansprüche 1 bis 10, enthaltend als Komponente (D) mindestens einen funktionalisierten Polyarylenether umfassend Carboxylgruppen mit einer Viskositätszahl gemäß DIN EN ISO 1628-1 von 45 bis 65 ml/g gemessen in 1 gew.-%iger Lösung in N-Methyl-2-pyrollidon bei 25°C.

12. Thermoplastische Formmassen nach einem oder mehreren der Ansprüche 1 bis 11, wobei der funktionalisierte Polyarylenether umfassend Carboxylgruppen Bausteine der allgemeinen Formel I wie in einem oder mehreren der Ansprüche 5 bis 8 definiert sowie Bausteine der allgemeinen Formel IV enthält: 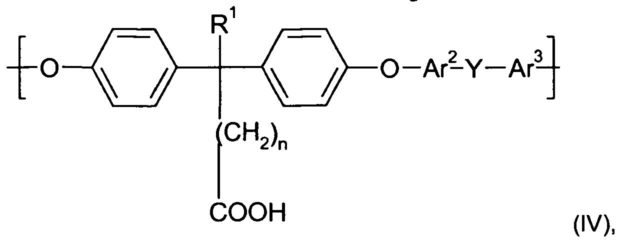 worin
- n für eine ganze Zahl von 0 bis 6, und
- R¹ für H, C₁ bis C₆-Alkyl, oder -(CH₂)ₙ-COOH
- Ar² und Ar³ unabhängig voneinander eine C₆ bis C₁₈-Arylengruppe und
- Y eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe
bedeutet.

13. Thermoplastische Formmassen nach Anspruch 12, wobei der Anteil von Bausteinen gemäß der allgemeinen Formel (IV) bezogen auf die Summe der Bausteine gemäß Formel (I) und Formel (IV) von 0,5 bis 2 mol-% beträgt, vorzugsweise von 0,7 bis 1,5 mol-%.

14. Thermoplastische Formmassen nach Anspruch 12 oder 13, wobei n = 2 und R¹ = Methyl.

15. Thermoplastische Formmassen nach einem oder mehreren der Ansprüche 12 bis 14, wobei Ar² = Ar³ = 1,4-Phenylen und Y = -SO₂-.

16. Thermoplastische Formmassen nach einem oder mehreren der Ansprüche 1 bis 15, wobei die Polyarylensulfide der Komponente (B) von 30 bis 100 Gew.-% aus Wiederholungseinheiten gemäß der allgemeinen Formel -Ar-S- aufgebaut sind, wobei -Ar- eine Arylengruppe mit 6 bis 18 Kohlenstoffatomen darstellt.

17. Thermoplastische Formmassen nach einem oder mehreren der Ansprüche 1 bis 16, wobei Komponente (B) Polyphenylensulfid, vorzugsweise Poly(1,4-phenylensulfid) ist.

18. Thermoplastische Formmassen nach einem oder mehreren der Ansprüche 1 bis 17, wobei Komponente (D) aus Glasfasern besteht.

19. Verfahren zur Herstellung von thermoplastischen Formmassen gemäß einem oder mehreren der Ansprüche 1 bis 18 umfassend das Vermischen der Komponenten (A) bis (F) in einer Mischvorrichtung.

20. Verwendung von thermoplastischen Formmassen gemäß einem oder mehreren der Ansprüche 1 bis 18 zu Herstellung von Formteilen, Fasern, Schäumen oder Filmen.

21. Formteile, Fasern, Schäume oder Filme enthaltend thermoplastische Formmassen gemäß einem oder mehreren der Ansprüche 1 bis 18.

## Claims

1. A thermoplastic molding composition comprising the following components:
(A1) at least one polyarylene ether having an average of at most 0.5 phenolic end groups per polymer chain,
(A2) optionally at least one polyarylene ether having an average of at least 1.5 phenolic end groups per polymer chain,
(B) at least one polyarylene sulfide,
(C) at least one hyperbranched polymer selected from hyperbranched polycarbonates and hyperbranched polyesters,
(D) optionally at least one functionalized polyarylene ether comprising carboxy groups,
(E) optionally at least one fibrous or particulate filler, and
(F) optionally further additives and/or processing aids.

2. The thermoplastic molding composition according to claim 1, comprising from 20 to 89.9% by weight of component (A1), from 0 to 10% by weight of component (A2), from 5 to 65% by weight of component (B), from 0.1 to 5% by weight of component (C), from 0 to 15% by weight of component (D), from 5 to 70% by weight of component (E), and from 0 to 40% by weight of component (F), where the total of the % by weight values for components (A) to (F), based on the entire amount of components (A) to (F), is 100% by weight.

3. The thermoplastic molding composition according to claim 1 or 2, comprising from 20 to 83.9% by weight of component (A1), from 1 to 10% by weight of component (A2), from 5 to 65% by weight of component (B), from 0.1 to 5% by weight of component (C), from 0 to 15% by weight of component (D), from 10 to 70% by weight of component (E) and from 0 to 40% by weight of component (F), where the total of the % by weight values for components (A) to (F), based on the entire amount of components (A) to (F), is 100% by weight.

4. The thermoplastic molding composition according to one or more of claims 1 to 3, where the polyarylene ethers (A1) have an average of at most 0.1 phenolic end groups per polymer chain and the polyarylene ethers (A2) have an average of at least 1.8 phenolic end groups per polymer chain.

5. The thermoplastic molding composition according to one or more of claims 1 to 4, where component (C) comprises at least one hyperbranched polycarbonate having an OH number of from 1 to 600 mg KOH/g of polycarbonate to DIN 53240.

6. The thermoplastic molding composition according to one or more of claims 1 to 5, where component (C) comprises at least one hyperbranched polyester of AₓB_{y} type, where x is at least 1 and y is at least 2.

7. The thermoplastic molding composition according to one or more of claims 1 to 6, where the polyarylene ethers of components (A1) and optionally (A2) are, independently of one another, composed of units of the general formula I: 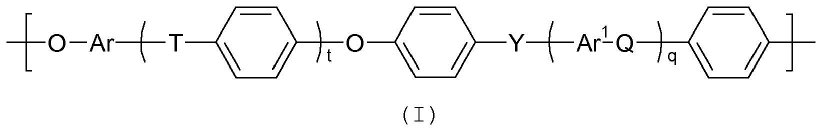 where the definitions are as follows:
t, q: independently of one another
0, 1, 2, or 3, Q, T, Y: independently of one another in each case a chemical bond or group selected from -O-, -S-, -SO₂-, S=O, C=O, -N=N-, and -CR^{a}R^{b}-, where R^{a} and R^{b} independently of one another are in each case a hydrogen atom or a C₁-C₁₂-alkyl, C₁-C₁₂-alkoxy, or C₆-C₁₈-aryl group, and where at least one of Q, T, and Y is -SO₂-, and
Ar, Ar¹: independently of one another a C₆-C₁₈-arylene group.

8. The thermoplastic molding composition according to claim 7, where the polyarylene ethers (A1) and (A2) are composed of the same units according to the general formula I.

9. The thermoplastic molding composition according to claim 7 or 8, where Q, T, and Y in formula (I) have been selected independently of one another from -O-and -SO₂-, and at least one of Q, T, and Y is -SO₂-.

10. The thermoplastic molding composition according to one or more of claims 7 to 9, where Ar and Ar¹ in formula (I) have been selected independently of one another from the group consisting of 1,4-phenylene, 1,3-phenylene, naphthylene, and 4,4'-bisphenylene.

11. The thermoplastic molding composition according to one or more of claims 1 to 10, comprising, as component (D), at least one functionalized polyarylene ether comprising carboxy groups with intrinsic viscosity to DIN EN ISO 1628-1 of from 45 to 65 ml/g, measured in 1% strength by weight solution in N-methyl-2-pyrollidone at 25°C.

12. The thermoplastic molding composition according to one or more of claims 1 to 11, where the functionalized polyarylene ether comprising carboxy groups comprises units of the general formula I as defined in one or more of claims 5 to 8, and also units of the general formula IV: 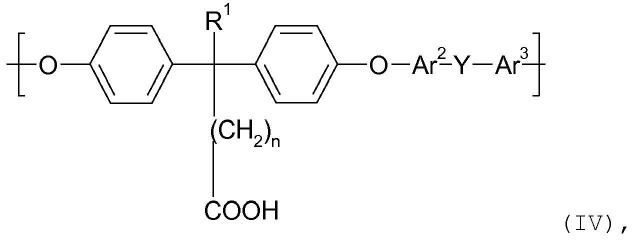 in which
- n is an integer from 0 to 6, and
- R¹ is H, C₁ to C₆-alkyl, or -(CH₂)ₙ-COOH
- Ar² and Ar³ independently of one another are a C₆-C₁₈-arylene group, and
- Y is a chemical bond or a group selected from - O-, -S-, -SO₂-, S=O, C=O, -N=N-, and -CR^{a}R^{b}-, where R^{a} and R^{b} independently of one another are in each case a hydrogen atom or a C₁-C₁₂-alkyl, C₁-C₁₂-alkoxy, or C₆-C₁₈-aryl group.

13. The thermoplastic molding composition according to claim 12, where the proportion of units according to the general formula (IV), based on the entirety of the units according to formula (I) and formula (IV), is from 0.5 to 2 mol%, preferably from 0.7 to 1.5 mol%.

14. The thermoplastic molding composition according to claim 12 or 13, where n = 2 and R¹ = methyl.

15. The thermoplastic molding composition according to one or more of claims 12 to 14, where Ar² = Ar³ = 1,4-phenylene and Y = -SO₂-.

16. The thermoplastic molding composition according to one or more of claims 1 to 15, where the polyarylene sulfides of component (B) are composed of from 30 to 100% by weight of repeat units of the general formula -Ar-S-, where -Ar- is an arylene group having from 6 to 18 carbon atoms.

17. The thermoplastic molding composition according to one or more of claims 1 to 16, where component (B) is polyphenylene sulfide, preferably poly(1,4-phenylene sulfide).

18. The thermoplastic molding composition according to one or more of claims 1 to 17, where component (D) is composed of glass fibers.

19. A process for producing thermoplastic molding compositions according to one or more of claims 1 to 18, comprising mixing of components (A) to (F) in a mixing apparatus.

20. The use of thermoplastic molding compositions according to one or more of claims 1 to 18 for producing moldings, fibers, foams, or films.

21. A molding, a fiber, a foam, or a film comprising thermoplastic molding compositions according to one or more of claims 1 to 18.

## Revendications

1. Masses de moulage thermoplastiques, contenant les composants suivants :
(A1) au moins un polyarylène-éther présentant en moyenne au plus 0,5 groupe terminal phénolique par chaîne polymère,
(A2) éventuellement au moins un polyarylène-éther présentant en moyenne au moins 1,5 groupe terminal phénolique par chaîne polymère,
(B) au moins un poly(sulfure d'arylène),
(C) au moins un polymère hyperramifié choisi parmi les polycarbonates hyperramifiés et les polyesters hyperramifiés,
(D) éventuellement au moins un polyarylène-éther fonctionnalisé comprenant des groupes carboxyle,
(E) éventuellement au moins une charge sous forme de fibres ou de particules et
(F) éventuellement d'autres additifs et/ou adjuvants de transformation.

2. Masses de moulage thermoplastiques selon la revendication 1, contenant 20 à 89,9% en poids de composant (A1), 0 à 10% en poids de composant (A2), 5 à 65% en poids de composant (B), 0,1 à 5% en poids de composant (C), 0 à 15% en poids de composant (D), 5 à 70% en poids de composant (E) et 0 à 40% en poids de composant (F), la somme des % en poids des composants (A) à (F) valant 100% en poids par rapport à la quantité totale des composants (A) à (F).

3. Masses de moulage thermoplastiques selon la revendication 1 ou 2, contenant 20 à 83,9% en poids de composant (A1), 1 à 10% en poids de composant (A2), 5 à 65% en poids de composant (B), 0,1 à 5% en poids de composant (C), 0 à 15% en poids de composant (D), 10 à 70% en poids de composant (E) et 0 à 40% en poids de composant (F), la somme des % en poids des composants (A) à (F) par rapport à la quantité totale des composants (A) à (F) valant 100% en poids.

4. Masses de moulage thermoplastiques selon l'une ou plusieurs des revendications 1 à 3, les polyarylène-éthers (A1) présentant en moyenne au plus 0,1 groupe terminal phénolique par chaîne polymère et les polyarylène-éthers (A2) présentant en moyenne au moins 1,8 groupe terminal phénolique par chaîne polymère.

5. Masses de moulage thermoplastiques selon l'une ou plusieurs des revendications 1 à 4, le composant (C) contenant au moins un polycarbonate hyperramifié présentant un indice d'OH de 1 à 600 mg de KOH/g de polycarbonate selon la norme DIN 53240.

6. Masses de moulage thermoplastiques selon l'une ou plusieurs des revendications 1 à 5, le composant (C) contenant au moins un polyester hyperramifié du type AₓB_{y}, x valant au moins 1 et y valant au moins 2.

7. Masses de moulage thermoplastiques selon l'une ou plusieurs des revendications 1 à 6, les polyarylène-éthers des composants (A1) et éventuellement (A2) étant constitués indépendamment les uns des autres à partir d'éléments de formule générale I : 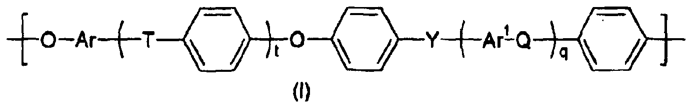 présentant les significations suivantes :
t, q : indépendamment l'un de l'autre, 0, 1, 2 ou 3,
Q, T, Y : indépendamment les uns des autres, à chaque fois une liaison ou un groupe, choisi parmi -O-, -S-, -SO₂-, S=O, C=O, -N=N-, -CR^{a}R^{b}-, R^{a} et R^{b} représentant indépendamment l'un de l'autre à chaque fois un atome d' hydrogène ou un groupe C₁-C₁₂-alkyle, C₁-C₁₂-alcoxy ou C₆-C₁₈-aryle, et au moins un parmi Q, T et Y représentant -SO₂- et
Ar, Ar¹ : indépendamment l'un de l'autre, un groupe C₆-C₁₈-arylène.

8. Masses de moulage thermoplastiques selon la revendication 7, les polyarylène-éthers (A1) et (A2) étant constitués à partir d'éléments identiques selon la formule générale I.

9. Masses de moulage thermoplastiques selon la revendication 7 ou 8, Q, T et Y dans la formule (I) étant choisis indépendamment les uns des autres parmi -O- et -SO₂- et au moins un parmi Q, T et Y représentant -SO₂-.

10. Masses de moulage thermoplastiques selon l'une ou plusieurs des revendications 7 à 9, Ar et Ar¹ dans la formule (I) étant choisis indépendamment l'un de l'autre dans le groupe constitué par 1,4-phénylène, 1,3-phénylène, naphtylène et 4,4'-bisphénylène.

11. Masses de moulage thermoplastiques selon l'une ou plusieurs des revendications 1 à 10, contenant comme composant (D) au moins un polyarylène-éther fonctionnalisé comprenant des groupes carboxyle présentant un indice de viscosité selon la norme DIN EN ISO 1628-1 de 45 à 65 ml/g, mesuré dans une solution à 1% en poids dans de la N-méthyl-2-pyrrolidone à 25°C.

12. Masses de moulage thermoplastiques selon l'une ou plusieurs des revendications 1 à 11, le polyarylène-éther fonctionnalisé comprenant des groupes carboxyle contenant des éléments de formule générale I comme définis dans l'une ou plusieurs des revendications 5 à 8 ainsi que des éléments de formule générale IV : 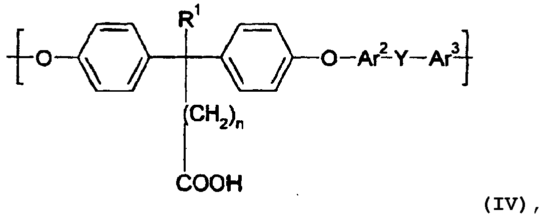 où
- n signifie un nombre entier de 0 à 6,
- R¹ signifie H, C₁ à C₆-alkyle, ou -(CH₂)ₙ-COOH,
- Ar² et Ar³ signifient, indépendamment l'un de l'autre, un groupe C₆ à C₁₈-arylène et
- Y signifie une liaison chimique ou un groupe, choisi parmi -O-, -S-, -SO₂-, S=O, C=O, -N=N- et -CR^{a}R^{b}-, R^{a} et R^{b} représentant, indépendamment l'un de l'autre, à chaque fois un atome d'hydrogène ou un groupe C₁-C₁₂-alkyle, C₁-C₁₂-alcoxy ou C₆-C₁₈-aryle.

13. Masses de moulage thermoplastiques selon la revendication 12, la proportion d'éléments selon la formule générale (IV) par rapport à la somme des éléments selon la formule (I) et la formule (IV) valant 0,5 à 2% en mole, de préférence 0,7 à 1.5% en mole.

14. Masses de moulage thermoplastiques selon la revendication 12 ou 13, n = 2 et R¹ = méthyle.

15. Masses de moulage thermoplastiques selon l'une ou plusieurs des revendications 12 à 14, Ar² = Ar³ = 1,4-phénylène et Y = -SO₂-.

16. Masses de moulage thermoplastiques selon l'une ou plusieurs des revendications 1 à 15, les poly(sulfures d'arylène) du composant (B) étant constitués par 30 à 100% en poids d'unités récurrentes selon la formule générale -Ar-S-, -Ar- représentant un groupe arylène comprenant 6 à 18 atomes de carbone.

17. Masses de moulage thermoplastiques selon l'une ou plusieurs des revendications 1 à 16, le composant (B) étant du poly(sulfure de phénylène), de préférence du poly(sulfure de 1,4-phénylène).

18. Masses de moulage thermoplastiques selon l'une ou plusieurs des revendications 1 à 17, le composant (D) étant constitué de fibres de verre.

19. Procédé pour la préparation de masses de moulage thermoplastiques selon l'une ou plusieurs des revendications 1 à 18, comprenant le mélange des composants (A) à (F) dans un dispositif de mélange.

20. Utilisation de masses de moulage thermoplastiques selon l'une ou plusieurs des revendications 1 à 18 pour la production de pièces moulées, de fibres, de mousses ou de films.

21. Pièces moulées, fibres, mousses ou films contenant des masses de moulage thermoplastiques selon l'une ou plusieurs des revendications 1 à 18.
